# EUROPEAN PATENT APPLICATION

(11) **EP 2 607 411 A1**
(43) Date of publication of application: **26.06.2013**
(21) Application number: 11195218.0
(22) Date of filing: 22.12.2011
(51) Int. Cl.: C08J 5/24, C08J 5/04, B32B 5/06, B32B 5/24, B32B 5/28

(54) **Improvements in or relating to fibre reinforced materials**

(71) Applicant: Hexcel Composites Ltd., Duxford, Cambridge CB22 4QD (GB)
(72) Inventor: Ellis, John, Duxford, Cambridgeshire CB22 4SF (GB); Beraud, Jean-Marc, 38140 Rives (FR)
(74) Representative: Pols, Ronald Maarten

(57) **Abstract**

A process for the production of a fibre reinforced thermoset resin. The process comprises impregnating a structural fibrous layer with a liquid thermosetting resin composition to form a prepreg, and subsequently curing the thermosetting resin, wherein at the time of impregnation an additional resin component is provided separately to the prepreg, the thermosetting resin composition being free of said additional resin component other than the thermosetting resin, and additional resins are provided to become integrated with the thermosetting resin during curing.

## Description

The present invention relates to fibre reinforced materials and in particular to prepregs comprising fibres and thermosetting resins which may be stacked to form a laminate and subsequently cured to form a composite material. Such laminates are known, they are lightweight and of high strength and are used in many structural applications such as in the aerospace industry and in wind turbine blades.

Prepreg is the term used to describe the fibre tow impregnated with the resin in the uncured state and ready for curing. The fibrous materials and resins employed in the prepregs will depend upon the properties required of the cured fibre reinforced material and also the use to which the cured laminate is to be put. The fibrous material is described herein as structural fibre.

Various methods have been proposed for the production of prepregs, one of the preferred methods being the impregnation of a moving fibrous web with the liquid or semi-solid uncured thermosetting resin. The system produced by this method may then be cut into sections of the desired length, a stack of the sections placed in a mould or a vacuum bag and cured to produce the final fibre reinforced laminate. One preferred family of resins for use in such applications are curable epoxy resins. However, although epoxy resins are highly suitable resins they can be brittle after cure causing the final laminate to crack or fracture upon impact. It is therefore common practice to include toughening materials such as thermoplastics or rubbers in the epoxy resin. This however can undesirably increase the viscosity of the epoxy resin making application to the moving fibre tow more difficult.

In order to produce final laminates with substantially uniform mechanical properties it is important that the structural fibres and the resin be mixed to provide a substantially homogenous prepreg. This requires uniform distribution of the structural fibres within the prepreg to provide a substantially continuous matrix of the resin surrounding the fibres. It is therefore important to minimise the encapsulation of air bubbles within the resin during application to the fibres, a problem that can be more acute if the viscosity of the resin is increased due to the presence of toughening materials such as thermoplastics and rubbers within the resin. Furthermore, it is important that the prepregs have the desired degree of surface tack, which will depend upon the laminate manufacturing process, in order to provide an integrated stack of prepregs that can be cured to produce the desired final laminate.

It has been proposed in, for example, French Patent Publication 2937583, European Patent Publication 1125728, United States Patent 6503856 and PCT Publication WO 2007/015706 that thin layers of material, sometimes known as veils, may be combined with the fibrous layers.. Such layers can support the fibrous layer and ensure the desired direction of the structural fibres and can either be retained during the curing of the prepreg or can be of a material that melts and flows together with the resin during the curing process. It has been proposed that the materials may be continuous films, or woven or non-woven fibrous materials. Additionally, it has been proposed that the material can be provided prior to impregnation of the fibrous material with the resin which can interfere with the impregnation of the structural fibres with the resin.

The conditions employed during the impregnation of a fibrous reinforcing layer with a resin layer must be carefully controlled to ensure the production of a substantially uniform prepreg. The speed of movement of the structural fibrous material and the temperature and pressure employed must be chosen to avoid damage to the fibrous layer and at the same time to get uniform impregnation of the fibrous web by the resin. If the viscosity of the resin is increased due to the presence of thermoplastics or rubbers, it may be necessary to reduce the speed of movement of the fibrous material resulting in an undesirably slow process. In some instances depending upon the weight and thickness of the fibrous material it may be necessary to raise the temperature employed during impregnation to avoid the need for high pressures that would damage the fibrous material. The use of the higher temperatures can however induce a degree of premature curing of the resin which can in turn reduce the tack of the prepreg leading to weaker bonding of the stack of prepregs prior to and during cure.

The present invention is concerned with improving the production and processing of prepregs.

The invention therefore provides a process for the production of fibre reinforced thermoset resins comprising impregnating a structural fibrous layer with a liquid thermosetting resin composition to form a prepreg and subsequently curing the thermosetting resin wherein at the time of impregnation the thermosetting resin is free of at least one additional resin component other than the thermosetting resin and the additional resin components is provided to become integrated with the thermosetting resin during the curing process.

The additional resin component may be provided in combination with a substrate or support structure. The additional resin component may perform an additional attribute or function in the thermosetting resin or in the composite material formed by combining the thermosetting resin with reinforcement material.

The absence of any additional resin in the thermosetting resin during impregnation enables the use of a resin composition of lower viscosity thus improving impregnation of the structural fibrous layer and allowing faster line speeds to be employed.

The additional resin is preferably provided as a thin layer and may be provided prior to, during or after impregnation of the structural fibrous layer with the thermosetting resin. Where such a thin layer is used it may be a film or a woven or non-woven layer or a grid like structure. If the thin layer is provided to the structural fibrous layer prior to impregnation of the structural fibrous layer with the thermosetting resin, it is preferred that the thin layer is porous to allow passage of the resin so that the resin can impregnate the structural fibrous layer. The layer may be exclusively of the resin required to be present in the final laminate or it may be a combination of the resin with a carrier material to enable processing. In addition to enabling the use of lower viscosity resin systems the use of a thin layer particularly a porous thin layer such as a woven or non-woven material or a grid can help control the surface tack of the prepreg. The layer may be provided prior to or after the addition of the resin to the structural fibrous layer and it may be provided on one or both sides of the fibrous layer in this way providing a degree of control over flow of resin across the layer to impact the surface tack of the prepreg.

The prepreg and laminates of the present invention may be used in place of processes for the preparation of existing prepreg and laminates where thermoplastic particles, which are insoluble in the resin matrix, are located in the resin prior to impregnation so as to be present within the final laminate to increase the damage tolerance of the cured composite part. Such prepreg and laminates are used to form toughened composite parts for structural applications in the aerospace industry and in any other applications where high structural strength and damage tolerance is required. The present invention may be applied to any of the known manufacturing and curing processes where thermoplastic particles are to be provided in the laminate as a toughening agent. The thermoplastic may also be provided as an additive in any other form other than as particles, such as a powder, or as a liquid for example as a resin.

Where the additional resins that are to be used are polymers the same thermoplastic polymers that have been used to make thermoplastic toughening particles may be used. In general, the thermoplastic resin must be insoluble in the matrix resin (typically an epoxy) at room temperature and at the elevated temperatures used to cure the resin during moulding. Depending upon the melting point of the thermoplastic polymer, it may melt or soften to varying degrees during curing at elevated temperatures and re-solidify as the cured laminate is cooled. Suitable thermoplastics should not dissolve in the resin, and include epoxy-soluble thermoplastics, such as polyethersulfone (PES) and polyetherimide (PEI).

Suitable examples of thermoplastic polymers that may be used to form the structured polymer layers of additional resins are polyamides (PA), copolyamides (CoPA), ether or ester block polyamides (PEBAX, PEBA), polyphthalamide (PPA), polyesters such as polyethylene terephthalate (PET) and polybutylene terephthalate (PBT), copolyesters (CoPE), thermoplastic polyurethanes (TPU), polyacetals, polyolefins including copolymers of polyolefins and fluorinated ethylene propylene (FEP), polyphenylenes sulfones, polyetheretherketones (PEEK), polyetherketoneketons (PEKK), poly(phenylene sulphate) (PPS), thermoplastic polyamides (PI), polyamideimide, liquid crystal polymers (LDP), block copolymers such as styrene-butadiene-methylmethacrylate (SBM) copolymers, methylmethacrylate-acrylate of butyl-methylmethacrylate (MAM) copolymers.

Polyamides and copolyamides are the preferred thermoplastic materials for the thermoplastic layers. Particles made from polyamides and copolyamides have been used as toughening particles in the past (see United States Patent No. 7754322 and published United States patent Application No. 2010/0178487 A1). Polyamides come in a variety of types, such as caprolactame (PA6), laurolactame (PA12), copolymers of PA6 and PA12, as well as PA10 and PA11. Any of the polyamides that are suitable for making particles that are used to toughen laminate interleaf may be used.

If polyamides are used they can have different melting temperatures depending upon the particular polyamides used, the degree of copolymerization of the polyamide and the degree of crystallinity. For example, polyamides that contain mostly polyamide 6 will typically have a melting point of above 190°C. Polyamides layers made from PA6 alone will typically have melting points of the order of 213°C, whereas blends of 80 wt % PA6 and 20 wt % PA12 will have melting points of the order of 194°C. When the polyamide copolymer contains 20 wt % PA6 and 80 wt % PA12, the melting point drops to around 160°C. As an advantage of the present invention, additional resins may be provided as different thermoplastic layers made from different types of polyamides. This allows one to mix and match layers of polyamide, or other suitable thermoplastic polymer to obtain the desired property. As an example a first, thermoplastic polymer layer could be a veil of PA6/PA12 copolymer fibres and a second thermoplastic polymer layer could be a veil of PA12 fibres. The resulting laminate 30 would include interleaf zones in which discreet layers of PA6/PA12 and PA12 are located. There are many other combinations possible depending upon the desired number of different thermoplastic polymers, the number of layers placed in each interleaf zone, the orientation and order of prepreg stacking to form the laminate and the orientation of the thermoplastic layers in the prepreg.

Where the additional resin is provided as a thin layer it should be sufficiently thin to fit within the zone between the prepregs and the density of the layer must be such that the appropriate amount or concentration of thermoplastic material is present in the interleaf zone to impart the desired amount of damage tolerance to the final laminate. In the production of cured high strength structural laminates, the thin layer has a layer thickness that ranges from 10 to 100 microns. Preferred interleaf zones range in mean thickness from 15 microns to 50 microns. The interleaf thickness is determined by taking N measurements (N is at least 50) of the thickness of the interleaf for a sample of the material over a distance X (X is at least 0.30 m) at the same intervals and by calculating the average value of the interleaf thickness for the N measurements. So the interleaf thickness as stated herein thus refers to the average interleaf thickness for a sample of the material.

The thin thermoplastic layer should have a thickness that allows it to fit within the above interleaf zones along with a thermosetting resin. When more than one layer is to be located within an interleaf zone, the combined thickness of the layers should be less than the desired interleaf zone thickness of the cured laminate. The thickness of the layer is preferably no more than 95 % of the desired interleaf zone thickness. Preferably, the thickness of the structured layer(s) will not be more than 75 % of the desired interleaf zone thickness.

The preferred thickness of the layer is from 0.5 microns to 50 microns. The actual thickness for each layer will be determined by the intended thickness of the interleaf zone in the cured laminate, the number of layers desired in each interleaf zone, the density of the structured thermoplastic layer and the amount (concentration) of thermoplastic polymer that is desired within each interleaf zone. The preferred thickness range for this from 2 microns to 35 microns and most preferably from 3 microns to 20 microns.

The coverage of the layer must be such that it provides the desired amount (concentration) of thermoplastic toughener to the final resin within the laminate. The required coverage for the layer is directly dependent upon the thickness of the layer being used. The thinner the layer, the denser the layer must be in order to provide the same concentration of thermoplastic toughner in the interleaf zone. The density of the veil layer is preferably such that it provides a thin layer that has a real weight of 1 to 20 grams per square metre (gsm) for thin layers that range from, 0.5 to 50 microns in thickness. For layers that are from 3 to 20 microns thick, the density of the layer should be such that the areal weight of the layer is from 2 gsm to 8 gsm.

Thermoplastic polymer layers having the required combination of thickness and areal weight are available commercially in the form of spunlaced and random fibrous layers sometimes known as veils. Woven fabric or scrim is generally not suitable due to the relatively lightweight and thin structure required. Thin solid or porous films are also not preferred. The thermoplastic polymer layer may comprise a polyamide. The thermoplastic layer may be made from randomly oriented PA6, PA11 or PA12 fibres and is available as 128D04 Nylon veil from Protechnic (Cernay, France). Another suitable nylon veil is 128D06 Nylon veil, which is a 6 gsm PA12 fibrous veil that is also available from Protechnic. Other suitable veil materials are V800 and V900 as supplied by Protechnic.

Fibrous veils are generally classified by the percentage of openness. For example, 128D04 Nylon fibrous veil has an openness of 70 %. The heavier 128D06 Nylon fibrous veil has an openness of 50 %. The veil preferably has an openness of between 30 % to 98 %, preferably from 50 % to 95 % and more preferably from 60 % to 90 %. This percentage of openness allow free passage of resin through the thermoplastic veil to ensure the desired degree of mixing of the resin with the thermoplastic fibres. This is particularly important when the thermoplastic fibres do not dissolve in the resin during cure.

The open-structured sheet may be characterised by the degree of openness of the sheet, i.e. the percentage of average surface area of the sheet which is made up of open holes in the sheet as determined on an area basis by image analysis of micrographs. The preferred open-structured sheets used as the thin layer in the present invention typically have a degree of openness of from 30 % to 98 %, preferably from 50 % to 95 %, more preferably from 60 % to 90 %. Openness is defined as said openness being defined as a ratio of the total area of a sample of 0.1 x 0.1 m of the material to the overall area of the reinforcing plain woven fabric over this same sample area and this is expressed as a percentage. This helps to maintain a lightweight sheet and also allows the free passage of resin.

The structural fibres employed in this invention may be in the form of random, knitted, non-woven, multi-axial, unidirectional or any other suitable pattern. For structural applications, it is generally preferred that the fibres be unidirectional in orientation. However, this is only one of many possible orientations for stacks of unidirectional fibre layers. For example, unidirectional fibres in neighbouring layers may be arranged orthogonal to each other in a so-called 0/90 arrangement, which signifies the angles between neighbouring fibre layers. Other arrangements, such as 0/+45/-45/90 are of course possible, among many other arrangements. When unidirectional fibre layers are used, the orientation of the fibre can vary throughout the laminate stack.

The structural fibres may comprise cracked (i.e. stretch-broken), selectively discontinuous or continuous fibres. The structural fibres may be made from a wide variety of materials, such as carbon, graphite, glass, metalized polymers, aramid and mixtures thereof. Carbon fibres are preferred. Typically the fibres will have a circular or almost circular cross-section with a diameter in the range of from 3 to 20 µm, preferably from 5 to 12 µm.

Exemplary layers of unidirectional structural fibres are made from HexTow® carbon fibres, which are available from Hexcel Corporation. Suitable HexTow® carbon fibres for use in making unidirectional fibre layers include: IM7 carbon fibres, which are available in fibres that contain 6,000 or 12,000 filaments and weight 0.223 tex (g/m) and 0.446 g/m respectively; IM8-IM10 carbon fibres, which are available in fibres that contain 12,000 filaments and weigh from 0.446 g/m to 0.324 g/m; and AS7 carbon fibres, which are available in fibres that contain 12,000 filaments and weigh 0.800 g/m.

An added advantage of the invention is that the structured layer may be used to hold dry unidirectional structural fibres together so that they can be processed using relatively simple prepreg processing equipment, such as that used for making fabric prepreg by film transfer where the fibre handling aspect of the machine is much simpler than typical unidirectional fibre prepreg machines.

As a feature of the present invention, it was discovered that lightweight fibrous layers such as veils and other similar structured layers that can be used as a substitute for thermoplastic toughening particles, also provide an effective means for holding unidirectional structural fibre layers together during handling prior to prepreg formation or other resin infusion. The fibrous layers therefore function both as a temporary holding system for the unidirectional structural fibres and as a source of toughening agents for the cured laminate.

It is preferred that the layer such as a fibrous veil and similar structured thermoplastic layer be selected so that it provides the desired level of stability to the unidirectional structural fibre layers during initial handling of the dry unidirectional fibres and that it also provides the desired level of laminate toughening. The location of a single lightweight fibrous layer on either side of dry unidirectional structural fibres was found to provide sufficient holding power to keep the dry unidirectional fibres together during handling. When the laminate was formed the single fibrous layers located on opposite sides of the unidirectional structural fibre layer were combined to form a double layer of fibrous thermoplastic material. This double layer of fibrous thermoplastic material was found to provide a sufficient amount of thermoplastic to provide desired levels of laminate toughening.

The thin layers of fibrous material are preferably made from randomly oriented thermoplastic fibres. Accordingly, they are preferably attached to the dry unidirectional fibres by partially melting or softening the thermoplastic and simultaneously pressing the layers against the unidirectional fibres. The partially melted/softened fibres bond to the unidirectional fibre layer and provide stabilization of the layer when the melted fibres are cooled down to their melting temperatures. The stabilised dry layer or tape of unidirectional structural fibres is then ready for handling or storage prior to impregnation with resin to form the prepreg.. This type of sandwich configuration is useful in situations where the addition of resin to form the prepreg is to take place at a later time or at a different location.

Fibrous layers of thermoplastic material, which have the properties set forth above, are uniquely suited and preferred as the thin layer for use in accordance with the present invention. When appropriately placed, they are able to function as both a substitute for conventional stabilization systems for dry unidirectional structural fibres and as a substitute for thermoplastic particles used to toughen laminate interleaf zones and their use allows the liquid epoxy resin to be free of the toughening rubbers or elastomers to reduce the viscosity of the resin to allow better and faster impregnation of the fibrous layer. Appropriate placement is required in order to achieve the above-described holding function. In some instances it may be necessary to provide additional support to the dry unidirectional structural fibres or employ a process where the resin and fibrous layer are simultaneously applied to the unidirectional structural fibres to form a prepreg.

In a further embodiment the invention may be used to provide additives in addition to the additional resins to the prepreg stack and the finished laminate. The additives may be included in the epoxy resin although it is preferred that they are not incorporated in the liquid epoxy resin prior to impregnation of the structural fibrous layer and are provided together with the additional resin. In this way the additives are not present in the liquid epoxy resin which is particularly useful if the additives would adversely impact the viscosity of the resin.. For example in certain applications such as in aircraft and wind turbine applications the laminates require a degree of electrical conductivity which may not be provided by the structural fibrous layer and the resin. Conductivity particles may therefore be included in the epoxy resin and/or in the layer of the additional resin although incorporation in the additional resin composition is preferred. Suitable conductivity products include metal strands which may or may not be continuous, copper strands or threads being particularly suitable although other metal strands or threads may be used. Metal and carbon particulates may also be included. The Conductivity materials may be incorporated into the thin layer during or after the manufacture of the layer.

The structural fibres of the prepregs will be substantially impregnated with a thermosetting resin such as an epoxy resin which is free of additional resins. Prepregs with a resin content of from 30 to 45 wt % of the total prepreg weight are preferred. Typically the prepreg comprises from 25 to 50 wt % of curable resin. Additionally the prepregs typically comprise from 45 to 75 wt % of structural fibres.

As discussed above, the prepregs according to the invention are intended to be laid up with other prepregs, to form a curable stack of prepregs. Thus, in one aspect, the invention relates to a curable stack of prepregs, the prepreg comprising a structural fibrous layer impregnated with an epoxy resin that is free of additional resins the stack additionally comprising interleaf layers substantially free of structural fibres wherein at least one interleaf layer comprises at least one toughening thermoplastic layer. Typically, most of the interleaf layers will comprise athermoplastic layer or open-structured sheet. In a preferred embodiment at least half of the interleaf layers comprise an open-structured sheet. It may even be desirable for at least 75 % of the interleaf layers to comprise such a sheet, or even substantially all of the interleaf layers. The interleaf layer may contain additional additives such as those required to impart electrical conductivity to the finished laminate. The interleaf layer is preferably porous to allow passage of the liquid resin and in this way the interleaf layer can in addition provide a degree of control of the surface tack of the prepreg.

The structural fibres in the prepreg stack will be substantially impregnated with the resin additive which is free of additional resins. For example, prepreg stacks with a resin content of from 30 to 45 % of the total weight of the prepreg stack or laminate are preferred. During the heating stage prior to cure of the prepreg, the thermosetting resin has a reduced viscosity which will enhance impregnation of the structural fibrous layer by the resin.

It has been found that the improvements in toughness can be achieved even though the thermoplastic polymer layer or open-structured sheet is very lightweight. This is particularly important for aircraft structural applications and wind turbine blades. Thus, open-structured sheets having weights per unit area in accordance with the present invention, as set forth above, are particularly well-suited for aerospace applications.

The prepreg and prepreg stack of the present invention allows use of low viscosity resin composition which ensures a very low quantity of entrapped gas during impregnation so that the degree of resin impregnation in the interstices of the structural fibres is high. Thus, each prepreg and the prepreg stack has a water pick-up value of less than 15 %, or less than 9%, more preferably less than 6 %, most preferably less than 3 %. The water pick-up test determines the degree of waterproofing or impregnation of a prepreg material. In this test, a specimen of the prepreg is weighed and clamped between two plates in such a way that a strip 5 mm wide protrudes from the plates. This arrangement is then suspended in the direction of the fibres in a water bath at room temperature (21°C) for 5 minutes. The specimen is then removed from the plates and weighed again and the difference in weight provides a value of the degree of impregnation within the specimen. The smaller the weight increase the greater the degree of waterproofing or impregnation. Typically the water pick up value for fabrics of a weight of up to 150 gsm (g/m²) is less than 5%. For fabrics between 150 gsm to 300 gsm the water pick up value is less than 15% and for fabrics between 300 to 1000 gsm the water pick up value is less than 25%.

The prepreg of this invention is intended to be laid-up with other composite materials (e.g. other prepregs according to the invention or otherwise) to produce a curable laminate or prepreg stack. The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The liquid thermosetting resin used in this invention may be selected from epoxy, isocyanate, benzoxazine, bismaleimide and acid anhydride, for example. Preferably the resin is an epoxy resin and such a resin composition typically comprises the resin, a hardener and optionally an accelerator for the hardener.

Suitable epoxy resins may comprise monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be preferably selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials.

The thermosetting resin composition may also comprise one or more curing agent. Suitable curing agents include anhydrides, particularly poly carboxylic anhydrides, amines, particularly aromatic amines e.g. 1,3-diaminobenzene, 4,4'-diamineodiphenylmethane, and particularly the sulphones and methylene bisanilines, e.g. 4,4'-diaminodiphenyl sulphone (4,4' DDS), and 3,3'-diaminodiphenyl sulphone (3,3' DDS), 4,4'-methylenebis (2-methyl-6-isopropylaniline (M-MIPA), 4,4'-methylenebis (3-chloro-2,6-diethylene aniline (M-CDEA), 4,4'-methylenebis (2,6 diethyleneaniline) M-DEA) and the phenol-formaldehyde resins. Preferred curing agents are the methylene bisanilines and the amino sulphones, particularly 4,4' DDS and 3,3' DDS.

The prepregs according to the present invention can be manufactured in a variety of ways. For example, the structural fibres may be brought into contact with the thermoplastic polymer layer such as a veil or anopen-structured sheet. Whilst in contact, they are together passed to an impregnation stage where at least one layer of resin composition is brought into contact with an external face of the structural fibre thin layer combination, and pressure is then applied to induce resin impregnation. Alternatively the thin layer can be applied to the resin layer, and thereafter the structural fibre layer is brought into contact with the resin and thin layer combination, before pressure-induced resin impregnation occurs. As a further alternative the structural fibrous layer may be resin impregnated without the thin layer, which is subsequently laid-down onto an external surface of the resin-impregnated structural fibrous layer.

In another aspect, the invention relates to a process for the manufacture of a prepreg, the process comprising feeding a structural fibrous layer in contact with an adjacent thermoplastic polymer layer or open-structured sheet, and bringing into contact with an external face of the structural layer and/or the thermoplastic polymer layer (open-structured sheet) a layer of curable resin comprising a liquid thermosetting resin composition, that is free from additional resins and compressing the resin, fibres and sheet together, to induce at least partial resin impregnation into the interstices between the structural fibres.

As mentioned previously, one thin polymer layer may be used although in certain applications it is advantageous for the layer of structural fibres to be sandwiched between two adjacent thin polymer layers prior to resin impregnation, as this helps to maintain the integrity of the fibres, particularly when the structural fibres are unidirectional. In a preferred process, the thin layer is fibrous and the fibres are adhered to the structural fibres by at least partially melting them.

In order to increase the rate of impregnation of the structural fibrous layer by the resin, the process is preferably carried out at an elevated temperature below the cure temperature of the thermosetting resin so that the viscosity of the thermosetting resin in reduced. However the temperature should not be so high that premature curing of the resin begins to occur. Thus, the process is preferably carried out at temperatures of from 40°C to 160°C.

The thermosetting resin composition is typically spread onto the external surface of a roller and coated onto a paper or other backing material to produce a layer of curable resin. The resin composition can then be brought into contact with, and optionally also impregnated into the layer of structural fibres, by passing the resin layer, the structural layer, and the additional thin layer through rollers. The resin may be present on one or two sheets of backing material, which are brought into contact with the structural fibrous layer and open-structured thin layer (thermoplastic polymer) by passing them through heated consolidation rollers to cause the resin to impregnate the structural fibres.

A backing sheet can be applied either before or after impregnation of the resin. However, it is typically applied before or during impregnation as it can provide a non-stick surface upon which to apply the pressure required for resin impregnation. Typically the backing sheet is the one on which the resin was mounted, although it can be removed and replaced with a different sheet as desired.

Once prepared the prepreg is typically rolled-up, in which form it can be stored for a period of time. It can then be unrolled and cut as desired and optionally laid up with other prepregs to form a prepreg stack.

Once prepared, the prepreg or prepreg stack is cured by exposure to elevated temperature, and optionally elevated pressure, to produce a cured laminate. As discussed above, the prepregs of the present invention can provide excellent toughness without requiring the high pressures encountered in an autoclave process.

Thus, in further aspect, the invention relates to a process of curing the thermosetting resin within a prepreg or prepreg stack as described herein, the process involving exposing the prepreg or prepreg stack to a temperature sufficient to induce curing of the thermosetting resin composition and is preferably carried out at a pressure of less than 3.0 bar absolute.

The curing process may be carried out at a pressure of less than 2.0 bar absolute. In a particularly preferred embodiment the pressure is less than atmospheric pressure. The curing process may be carried out at one or more temperatures in the range of from 80 to 200°C, for a time sufficient to cure of the thermosetting resin composition to the desired degree.

Curing at a pressure close to atmospheric pressure can be achieved by the so-called vacuum bag technique. This involves placing the prepreg or prepreg stack in an air-tight bag and creating a vacuum on the inside of the bag. This has the effect that the prepreg stack experiences a consolidation pressure of up to atmospheric pressure, depending on the degree of vacuum applied.

Once cured, the prepreg or prepreg stack becomes a composite laminate, suitable for use in a structural application, for example an aerospace structure or a wind turbine blade.

Such composite laminates can comprise structural fibres at a level of from 55 % to 70 % by volume, preferably from 58 % to 65 % by volume.

The unique properties of the lightweight layers such as woven and non woven fibrous layers, and other similar structured thermoplastic polymer layers, used in this invention make it possible to cure the laminates using such layers in an out-of-autoclave process. This relatively low pressure and low cost curing process can be used because the damage tolerance (e.g. Compression After Impact - DAI) of the cured laminate is not substantially less than the damage tolerance achieved using the higher pressure and higher expense of an autoclave. In contrast, out-of-autoclave curing of laminates that have interleaf zones toughened with insoluble thermoplastic particles produces cured laminates that have damage tolerances that are significantly reduced.

The invention is illustrated by reference to the accompanying drawings in which
Figure 1 shows the manufacture of a prepreg in which a single thin layer of a fibrous material is provided prior to impregnation of the structural fibrous layer with the thermosetting resin.
Figure 2 is similar to Figure 1 except that an additional thin layer of non-woven material is provided also prior to impregnation of the structural fibrous layer with the thermosetting resin.
Figure 3 shows the manufacture of a prepreg in which a single thin layer of fibrous material is provided after the impregnation of the structural fibrous layer with the thermosetting resin.

Like numerals refer to the same features in all the Figures.

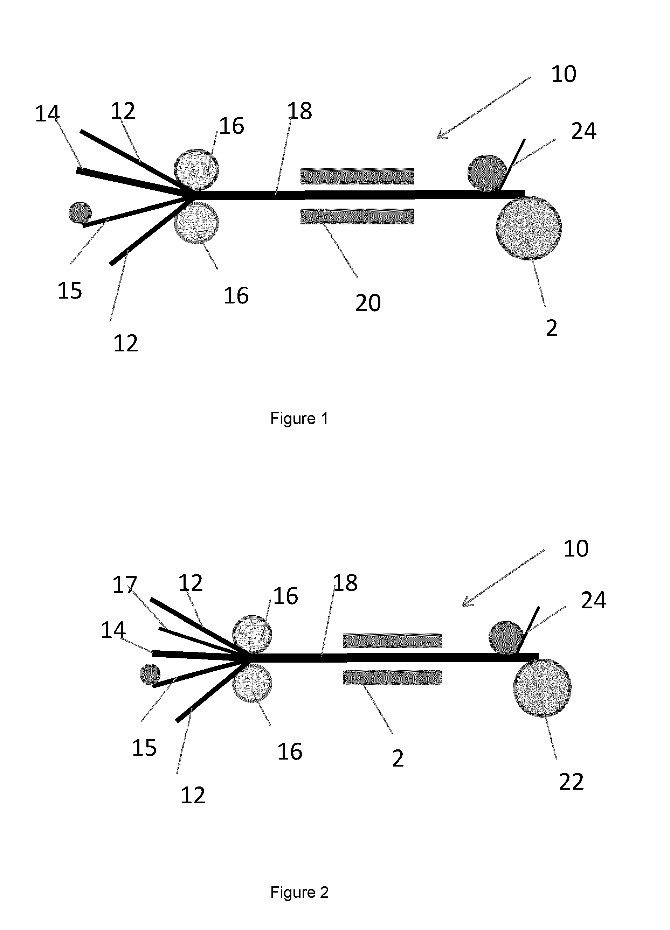

Referring to Figure 1 (10) is a prepreg manufacturing line in which (12) denotes two resin layers each provided with a backing substrate such as paper or polyolefin film (not shown). (14) is a layer of structural fibrous material such as carbon fibre. (15) is a thin non-woven layer of thermoplastic toughening material. The layers are brought together between compression rollers (16) to produce a consolidated prepreg (18) which then passes to the impregnation unit (20) where it is heated and compressed. The compressed prepreg then passes to wind up roll (22) and one of the backing layers is removed at (24). The rolled prepreg can then be stored for subsequent use in laminate manufacture.

Figure 2 is substantially the same as Figure 1 except that an additional thin non woven layer (17) is provided prior to impregnation.

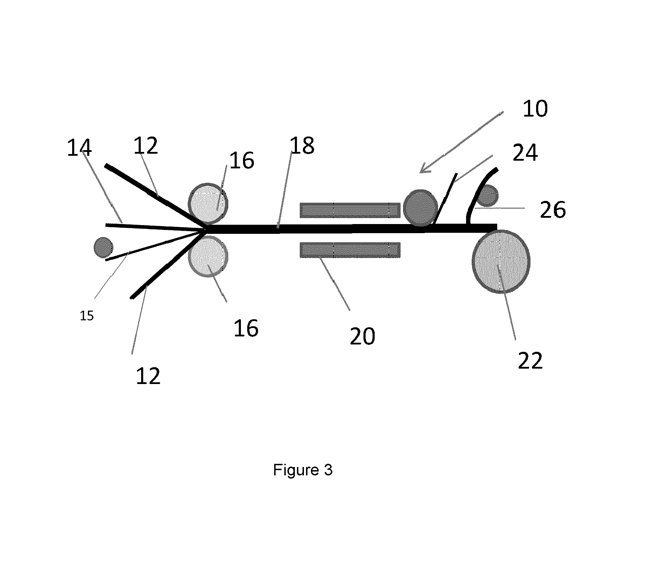

In Figure 3 a thin thermoplastic layer (15) is provided prior to impregnation and an additional thermoplastic layer is provided at (26) after the removal of one of the backing layers (24).

The present invention is illustrated but in no way limited by reference to the following examples in which Example 1 employs the process illustrated in Figure 1, Example 2 employs the process illustrated in Figure 2 and Example 3 employs the process illustrated in Figure 3. In each Example 1,2 and 3 the resin layers (12) were of the epoxy resin material M21 as supplied by Hexcel. This resin has a glass transition temperature of 195 °C and generally contains polyamide particles PA6 to improve the toughness of the resin. However, in Examples 1, 2 and 3, no polyamide was present in the M21 resin. The upper resin layer was 50 g/m² of resin (no polyamide) provided with a paper backing and the lower layer was 43 g/m² of resin (no polyamide) provided with a polyethylene film backing. The structural fibrous material (14) was unidirectional orientated carbon fibre having 12 K tows of coverage 194 g/m² and the non-woven layers (2) (14), (17) and (26) were non-woven layers of polyamide (PA6) of weight of 8 g/m² . The quantities were such to provide 34 wt % epoxy resin in the final prepreg and a prepreg area weight of 294 g/m² to provide 2.7% weight of PA6 based on the weight of the final prepreg for the prepreg of Example 1 (1 layer of PA6) and 5.4% weight of PA6 based on the weight of the final prepreg for the prepreg of Examples 2 and 3 (2 layers of PA6 of 8 g/m² each).

During impregnation, the temperature of the resin was 135 °C. The line spend was 1.6 metres/minute.

In the Comparative Example a prepreg is prepared by impregnating a structural fibrous material (14) which is again a unidirectional orientated carbon fibre having 12 K tows of coverage 194 g/m² with resin layers on each side in the same way as in the Examples 1 to 3. The resin layers (12) were the epoxy resin material M21 as supplied by Hexcel. This resin has a glass transition temperature of 195 °C but it differs from the M21 resin of Examples 1 to 3 as it contained polyamide particles PA6 to improve the toughness of the resin for the purpose of comparison. The addition of the polyamide particles increases the viscosity of the resin during processing on the machine 10. The upper resin layer was 50 g/m² of M21 resin (containing polyamide) provided with a paper backing and the lower layer was 50 g/m² of M21 resin (containing polyamide) provided with a polyethylene film backing. The quantities were such to provide 34 wt % epoxy resin in the final prepreg and a prepreg area weight of 294 g/m² to provide 13% by weight of PA6 based on the weight of the final prepreg.

The properties of the prepregs obtained in the Examples were compared with that of the material of the Comparative Example with the following results.

| **Product** | **Reference Standard Typical Product** | **Example 1** | **Example 2** | **Example 3** |
|---|---|---|---|---|
| ILSS | 90 | 88 | 87.3 | 87.4 |
| Laminate resistance / Ohms | 02. to 1 | 0.72 | 1.84 | 1.38 |
| Laminate conductivity S / m | 9.3 to 1.87 | 2.6 | 1.01 | 1.35 |
| Compression after impact following 30 J impact energy | 250 | 285 | 355 | 410 |

There is thus provided a prepreg which contains additional functional layers in the form of additional resin components which improve the electrical or mechanical properties of the cured prepreg. The additional resin components may be provided as one or more layers. Preferably the additional resin components are present between layers of the structural fibrous layers.

## Claims

1. A process for the production of a fibre reinforced thermoset resin comprising
(a) impregnating a structural fibrous layer with a liquid thermosetting resin composition to form a prepreg, and
(b) subsequently curing the thermosetting resin, wherein at the time of impregnation an additional resin component is provided separately to the prepreg, the thermosetting resin composition being free of said additional resin component other than the thermosetting resin, and additional resins are provided to become integrated with the thermosetting resin during curing.

2. A process according to Claim 1 in which the additional resin is provided as a separate layer, a thin layer or a veil.

3. A process according to Claim 1 or Claim 2 in which the additional resin is provided prior to during or after impregnation of the structural fibrous layer with the thermosetting resin composition.

4. A process according to Claim 2 and Claim 3 wherein the veil or separate layer or thin layer is a film or a woven or non-woven substrate or a grid.

5. A process according to any of the preceding claims in which the additional resin is a thermoplastic that is insoluble in the thermosetting resin at ambient temperature and at the elevated temperatures used to cure the resin.

6. A process according to any of the preceding claims in which two or more additional resins are provided as thermoplastic layers made from different thermoplastic materials.

7. A process according to Claim 6 in which the thermoplastics are polyamides.

8. A process according to any of the preceding claims in which the additional resins are provided as a layer of thickness from 0.5 to 50 microns.

9. A process according to any of the preceding claims in which the layer has an openness of between 30 % to 98 %, preferably from 50 % to 95 % and more preferably from 60 % to 90 %.

10. A process according to any of the preceding claims in which additives in addition to the additional resins are provided together with the additional resin.

11. A process according to Claim 10 in which the additives comprise conducting particles.

12. A process according to any of the preceding claims in which the additional resin is supplied as a layer and the fibres in the structural fibrous layer are unidirectional and the additional resin layer holds the unidirectional fibres in place.

13. A process according to any of the preceding claims in which the prepreg comprises from 25 to 50 wt % of curable resin.

14. A process according to any of the preceding claims in which the prepregs comprises from 45 to 75 wt % of fibres.

15. A process according to any of the preceding claims, wherein the fibre reinforced thermoset resin comprises multiple impregnated structural fibrous layers impregnated with a liquid thermosetting resin composition to form prepregs, and at the time of impregnation of said fibrous layers, additional resin components are provided separately to the prepregs interleaved between said prepregs, the thermosetting resin composition being free of said additional resin components other than the thermosetting resin, and additional resins are provided to become integrated with the thermosetting resin during curing.

16. A curable stack of prepregs, the prepreg comprising a structural fibrous layer impregnated with an epoxy resin that is free of additional resins other than the epoxy resin the stack additionally comprising interleaf layers substantially free of structural fibres wherein at least one interleaf layer comprises at least one toughening thermoplastic material for toughening the epoxy resin.

17. A curable stack according to Claim 16 in which the interleaf layer contains additional additives, to impart electrical conductivity to the finished laminate.

18. A curable stack according to Claim 16 or Claim 17 wherein each prepreg has a water pick-up value of less than 15 %.

19. A curable stack according to any of Claims 16 to 18 having a water pick-up value of less than 25 %.

20. A prepreg or a prepreg stack according to any of Claims 16 to 19 in which the curable resin is an epoxy resin and the resin composition comprises the resin, a hardener and optionally an accelerator for the hardener.

21. A process for the manufacture of a prepreg, comprising feeding one or more layers of structural fibres in contact with an adjacent thermoplastic polymer layer or open-structured sheet, and bringing into contact with an external face of the structural fibrous layer and/or the thermoplastic polymer layer (open-structured sheet) a layer of curable resin comprising liquid thermosetting resin composition, that is free from additional resins and compressing the resin, fibres and sheet together, to induce at least partial resin impregnation into the interstices between the structural fibres.

22. A process according to Claim 21 in which the structural layer of fibres is sandwiched between two adjacent polymer veils prior to resin impregnation.
